# FASCICULE DE BREVET EUROPEEN

(11) **EP 1 253 102 B1**
(45) Date de publication et mention de la délivrance du brevet: **04.02.2004**
(21) Numéro de dépôt: 02356078.2
(22) Date de dépôt: 25.04.2002
(51) Int. Cl.: B66D 1/54, B66D 1/14, F16H 1/16, F16H 35/10

(54) **Systéme de freinage**
Bremssystem
Braking system

(30) Priorité: 25.04.2001 FR 0105540; 19.03.2002 FR 0203357
(43) Date de publication de la demande: 30.10.2002
(73) Titulaire: Pachov, M. Yavor, 01360 Balan (FR)
(72) Inventeur: Pachov, M. Yavor, 01360 Balan (FR)
(74) Mandataire: Guerre, Dominique

(56) Documents cités:
- EP-A- 0 869 295
- DE-U- 29 702 062
- US-A- 1 427 025
- US-A- 4 023 430
- US-A- 4 625 946
- US-A- 5 144 849

## Description

La présente invention concerne un système de freinage, destiné à équiper un mécanisme comprenant un ou plusieurs organes tournants dont il est important de conserver la maîtrise en toutes circonstances notamment pour des raisons de sécurité. Dans une application intéressante, le système selon l'invention est utilisé pour le freinage du tambour d'enroulement d'un treuil, ou mécanisme similaire, en cas de défaillance de ce treuil, notamment de défaillance des organes d'entraînement du tambour.

Le brevet américain US 4 625 946 et la demande de brevet français n° 2 189 302 décrivent des systèmes de sécurité comprenant une roue dentée liée en rotation à l'organe tournant à freiner et une vis sans fin, entraînée en rotation par un moteur, en prise permanente avec la roue dentée.

US 4 625 946 divulge les caractéristiques du préambule de la revendication indépendante 1.

Le moteur d'entraînement de la vis permet au système de freinage de suivre le mouvement de l'organe tournant auquel est reliée la roue dentée. En cas de défaillance, cette roue dentée devient motrice par rapport à la vis, ce qui génère des frottements entre ses dents et le filet de cette vis, assurant le freinage dudit organe tournant.

Il apparaît qu'une défaillance du système de freinage peut être à redouter dans certaines situations, selon les vitesses et les inerties du ou des organes tournants à freiner, particulièrement si la sollicitation de freinage est brutale et intense.

La présente invention vise à remédier à cet inconvénient essentiel.

Le système qu'elle concerne comprend, de manière connue en soi, une roue dentée liée en rotation par rapport à au moins un organe tournant à freiner et une vis sans fin, entraînée en rotation par un moteur lors de la rotation de l'organe tournant, qui est prise permanente avec la roue dentée.

Selon l'invention, la vis est contenue dans un alésage de diamètre légèrement supérieur à celui de la vis.

Cette vis est ainsi maintenue dans une direction radiale par rapport à la roue dentée, tout au long de sa longueur, et est par conséquent à même d'encaisser sans détérioration les contraintes qu'exerce la roue dentée sur elle dans cette même direction.

Le montage de la vis dans le système de freinage est en outre particulièrement simple à réaliser.

De préférence, la vis comprend au moins une portée cylindrique coaxiale à sa portion filetée, et
- ledit alésage présente un diamètre légèrement supérieur à celui de cette ou ces portées cylindriques.

Le filet de la vis ne porte ainsi pas contre la paroi de la pièce qui délimite l'alésage.

Avantageusement, le système de freinage comprend des moyens d'absorption/dissipation d'énergie spécifiques, venant en supplément du moyen de dissipation d'énergie que constituent les frottements des dents de la roue contre le filet de la vis.

Ainsi, en cas de sollicitation, brutale et intense du système de freinage, l'énergie transmise à la vis par la roue est absorbée et/ou dissipée non seulement par lesdits frottements mais également par intervention desdits moyens spécifiques supplémentaires.

Ces moyens spécifiques d'absorption/dissipation d'énergie peuvent comprendre un montage coulissant de la vis dans ledit alésage et des moyens d'absorption/dissipation d'énergie associés à cette vis et actionnés par celle-ci lors de son coulissement.

Ces moyens associés d'absorption/dissipation d'énergie peuvent comprendre au moins un moyen élastique, tel qu'un ressort, interposé entre au moins une extrémité de la vis et les parois de la pièce délimitant l'alésage.

Ce ou ces moyens élastiques ont également pour avantage de maintenir la vis en position au cours de son fonctionnement normal, et garantissent, en cas de freinage, que de la vis ait toujours une course de coulissement disponible.

Ces moyens peuvent également comprendre :
- un liquide contenu dans l'espace délimité par au moins un piston, contre lequel vient en appui une extrémité de la vis, et
- un ou plusieurs conduits et/ou interstices d'échappement de ce liquide lors du coulissement de la vis, ce ou ces conduits et/ou interstices ayant des sections réduites propres à n'autoriser un échappement dudit liquide que sur un intervalle de temps non instantané.

Ce liquide peut être plus ou moins visqueux et/ou être lubrifiant, en particulier de l'huile, de manière à servir également à lubrifier la roue et la vis.

Ledit piston peut en particulier être constitué par une portée cylindrique précitée.

Le ou lesdits conduits et/ou interstices peuvent comprendre des moyens de réglage du débit du liquide, pour permettre d'adapter le système de freinage aux spécificités d'un mécanisme à équiper, et/ou des moyens anti-retour de ce liquide, pour permettre d'obtenir un amortissement différent pour chaque sens de coulissement de la vis.

Dans ce cas de coulissement de la vis, le système peut en outre inclure des capteurs ou des détecteurs du coulissement de la vis, sollicitant des moyens de commande ou de contrôle qui agissent sur les moyens d'entraînement du ou desdits organes tournants.

Lesdits moyens spécifiques d'absorption/dissipation d'énergie peuvent également comprendre des moyens de liaison à frottements entre la roue dentée et son moyeu, ou entre la roue dentée et l'arbre recevant cette roue, libérant le pivotement de cette roue par rapport à ce moyeu au-delà d'un certain seuil de couple, avec frottements.

Ces moyens spécifiques d'absorption/dissipation d'énergie peuvent aussi comprendre un montage souple et/ou flottant du système de freinage par rapport au bâti qui le comporte.

Pour sa bonne compréhension, l'invention est à nouveau décrite ci-dessous en référence au dessin schématique annexé représentant, à titre d'exemple non limitatif, une forme de réalisation préférée du système de freinage qu'elle concerne.
La figure 1 en est une vue isométrique ;
la figure 2 est une vue isométrique et partiellement écorchée de ses pièces internes ;
la figure 3 en est une vue en coupe longitudinale ;
la figure 3A est une vue agrandie du détail entouré d'un cercle sur la figure 3 ;
la figure 4 en est une vue en coupe transversale, vis enlevée, selon la ligne A-A de la figure 4A ;
la figure 5 est une vue d'une variante, en coupe transversale ;
les figures 6a à 6d montrent de manière schématique, en coupe, des variantes de réalisation ;
la figure 7 est une vue isométrique d'un treuil à chaîne cinématique en "U", équipé du système selon l'invention ;
la figure 8 est un schéma d'un exemple du raccordement du treuil avec la partie électrique correspondante, et
la figure 9 est un schéma d'un exemple du raccordement du treuil avec la partie électrique correspondante, dans une version plus complexe, mais offrant aussi plus de sécurité, que l'exemple du raccordement selon la figure 7.

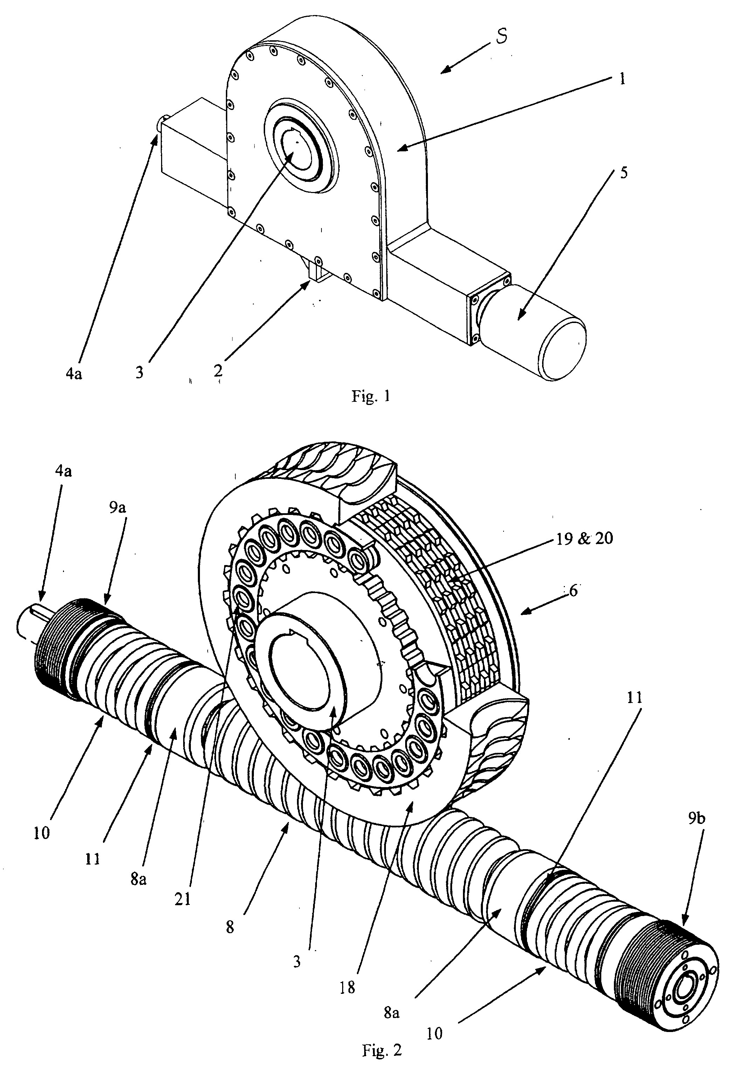

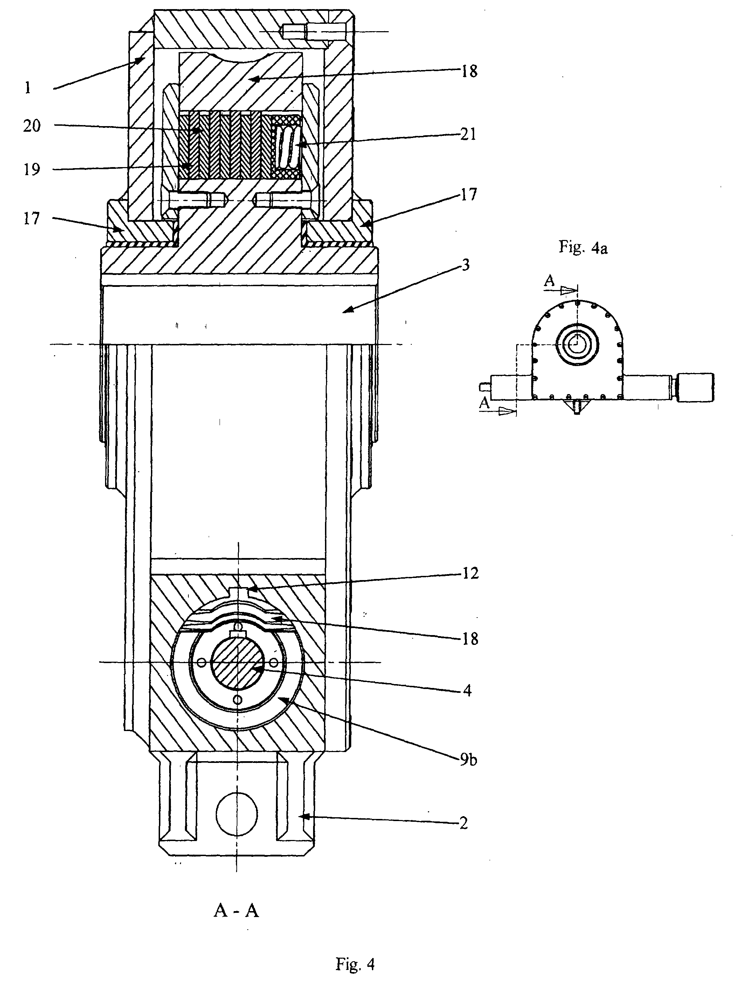

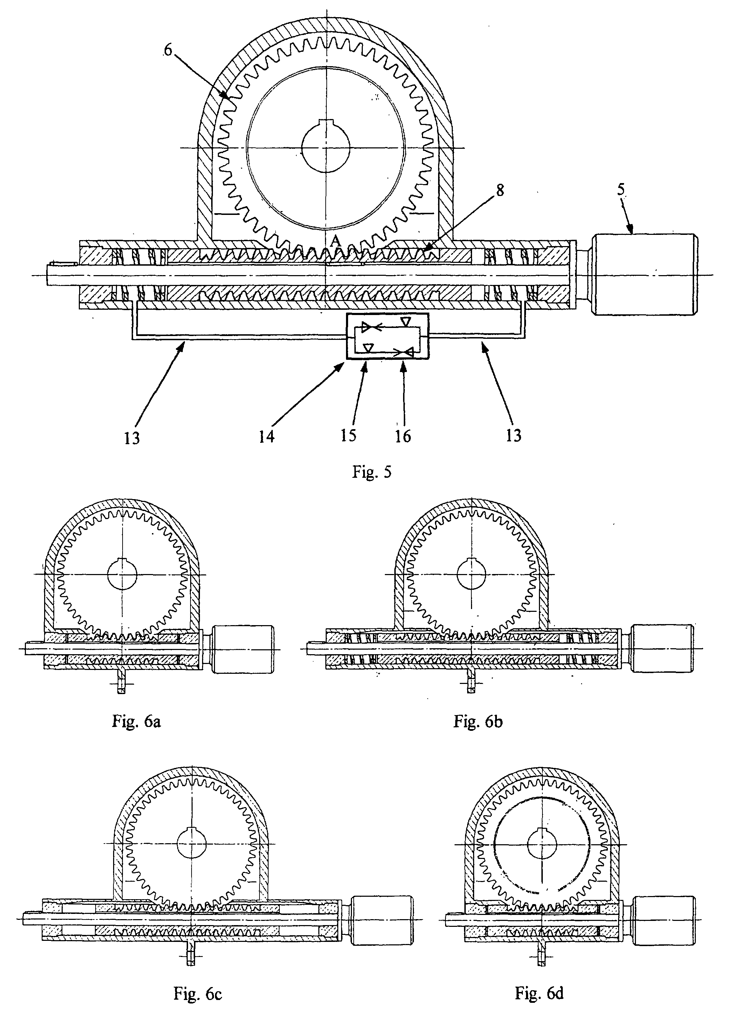

Le système de freinage S représenté sur les figures 1 à 5 comprend une roue dentée 6, destinée à être liée en rotation par rapport à au moins un organe tournant à freiner (le tambour 34 du treuil montré sur la figure 6) et une vis sans fin 8, entraînée en rotation par un moteur 5 lors de la rotation de l'organe tournant 34, qui est prise permanente avec la roue dentée 6.

Le système S comprend un boîtier 1 qui sert de logement aux paliers 9a et 9b de l'arbre 3 de la roue 6 et de l'arbre 4 de la vis 8.

L'une des extrémités de l'arbre 4 est actionné par le moteur 5, qui peut avoir un frein incorporé non représenté, tandis que l'autre extrémité présente un bout 4a qui peut recevoir une manivelle ou tout autre moyen d'actionnement amovible non représenté, assurant ainsi un moyen de manoeuvre "de secours" de l'arbre de sécurité, notamment en cas d'indisponibilité de son entraînement principal. Un bras de couple 2 attenant au boîtier 1 permet d'assujettir le système S au bâti de l'appareil (non représenté) sur lequel il est mis en oeuvre.

La vis 8 est insérée dans un alésage que forment deux extensions tubulaires coaxiales du boîtier et la partie inférieure de la chambre de ce boîtier contenant la roue dentée. La vis 8 peut coulisser à l'intérieur de cet alésage, ainsi que sur son arbre 4, dont elle est, par contre, rendue solidaire en rotation. Ses deux extrémités comportent chacune une portée cylindrique 8a, d'un diamètre légèrement inférieur à l'alésage du boîtier 1, qui jouent un double rôle de tourillons et de pistons.

L'arbre 4 de la vis 8 est supporté par deux paliers 9a et 9b, qui en assurent aussi l'arrêt axial 22 et l'étanchéité 23. Ces mêmes paliers 9a et 9b servent de butées axiales à la vis 8, par l'intermédiaire de ressorts 10 et de rondelles de friction 11.

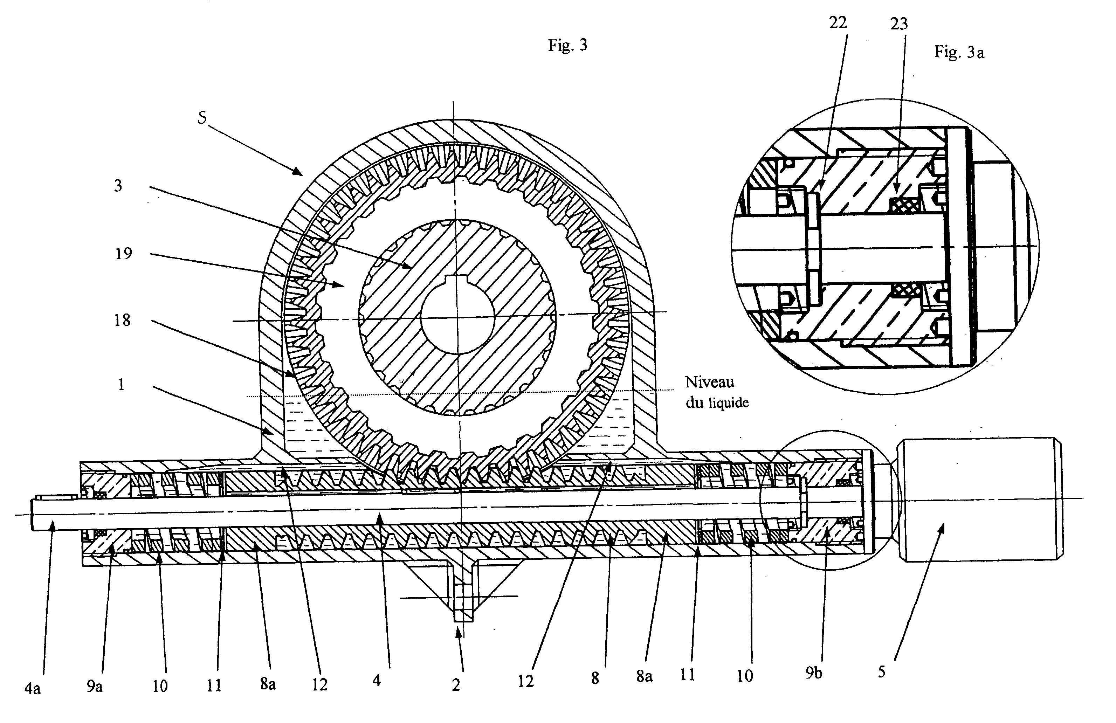

Le système S est rempli de liquide lubrifiant L, qui occupe le volume libre de l'alésage du boîtier 1 jusqu'au niveau montré sur la figure 3. Pour se déplacer en coulissement, la vis 8 doit donc chasser la quantité de liquide L emprisonné entre elle et le palier 9a, 9b correspondant.

La vitesse axiale de la vis 8 est fonction du volume de liquide qui peut s'échapper de cet espace. Il convient donc de créer au moins un passage permettant au liquide de s'échapper, de manière limitée. Le boîtier 1 et/ou la vis 8 et/ou l'arbre 4 de la vis doivent être configurés en conséquence de manière appropriée par des espaces creux.

Selon l'exemple présenté, une saignée 12, pratiquée le long de la paroi délimitant l'alésage, permet au liquide de passer vers l'arrière de la vis 8 lorsque celle-ci a tendance à se déplacer sous l'effet de la roue 6. La saignée 12 a une section limitée, qui peut également être variable le long de l'alésage, ce qui permet de programmer la résistance au déplacement de la vis 8.

La figure 5 montre une variante à amortissement hydraulique réglable. Les deux volumes des deux côtés de la vis 8 communiquent par des tuyauteries 13 par l'extérieur du boîtier 1. Un boîtier 14 contient au moins un robinet de réglage 15. La mise en oeuvre d'au moins un clapet anti-retour 16 permet d'obtenir un amortissement différent pour chaque sens de coulissement de la vis 8, selon que ce clapet permet ou empêche le débit de fluide.

L'arbre 3 de la roue 6 est supportée par ses paliers 17, qui en assurent aussi l'arrêt axial et éventuellement l'étanchéité. La transmission du couple entre l'arbre 3 et la couronne dentée 18 se fait par l'intermédiaire du frottement dans un limiteur de couple multidisques, composé de disques 19 en prise avec la couronne dentée 18, de disques 20 en prise avec l'arbre 3 et d'un ensemble d'éléments élastiques 21 assurant la pression nécessaire entre les disques.

Les figures 6a à 6d montrent des variantes du système 1 dans lesquelles, respectivement,
- le système 1 ne comprend pas de ressorts 10, ni de saignée 12, ni un limiteur de couple multidisques 19 à 21 tel que précité (figure 6a)
- le système 1 comprend des ressorts 10 et la saignée 12 mais la roue 6 n'est pas reliée à son arbre par un limiteur de couple multidisques 19 à 21 tel que précité (figure 6b) ;
- le système 1 comprend uniquement la saignée 12 (figure 6c) ;
- le système 1 comprend uniquement un limiteur de couple multidisques 19 à 21 tel que précité (figure 6d).

Toutes les combinaisons de ces différents moyens d'absorption/dissipation d'énergie sont possibles.

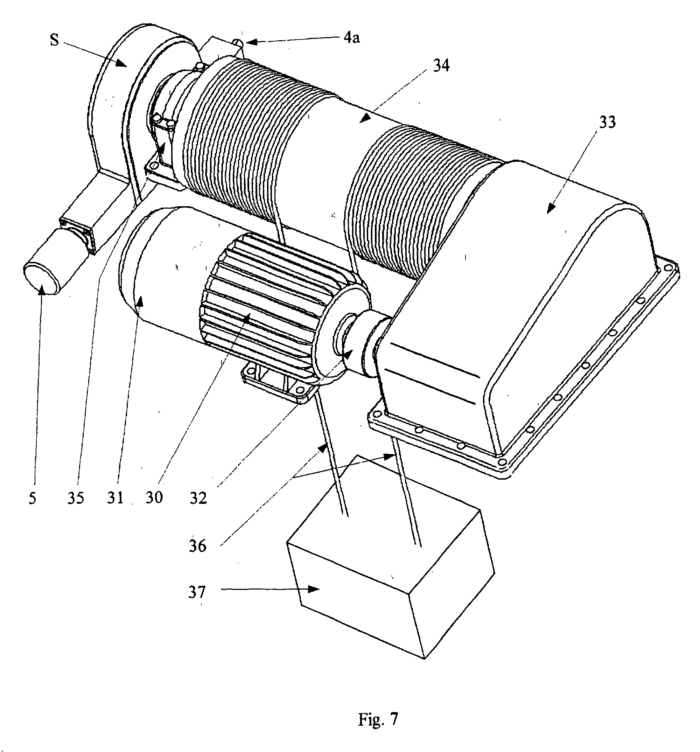

L'exemple d'application présenté sur les figures 7 à 9 est donné à titre indicatif et non limitatif. L'élévation de charges est un domaine très représentatif de la problématique que résoud le système S. Cet exemple permet de démontrer les avantages qui en découlent.

La figure 7 est une vue isométrique du système S appliqué à un mécanisme de levage classique, à chaîne cinématique en "U".

La partie "classique" du mécanisme, posée sur un châssis non représenté, est constituée d'un moteur électrique 30 à frein intégré 31 qui entraîne, par le biais d'un accouplement éventuellement limiteur de couple 32, l'arbre grande vitesse GV d'un réducteur à engrenages cylindriques 33. Le tambour d'enroulement 34 pour deux câbles 36 qui suspendent la charge 37 est supporté à une extrémité et est mû directement par l'arbre petite vitesse PV du réducteur 33. A l'autre extrémité du tambour 34, son arbre est supporté par un palier 35 et vient en prise directe avec le système S. Dans cet exemple, le système S est monté "flottant" sur l'arbre du tambour et un bras de réaction l'immobilise en rotation par rapport au châssis.

Le moteur 30 et le réducteur 33 sont choisis de manière traditionnelle, c'est-à-dire qu'ils assurent la puissance nécessaire pour lever la charge nominale. Il en est de même du frein 31, qui peut naturellement être distinct du moteur.

Le moteur 5 associé au système a un couple juste suffisant pour entraîner la vis 8 seule, il est par conséquent d'une puissance très faible, surtout par rapport au moteur 30. L'influence du couple sur la vitesse de rotation du moteur 5 du système doit être la plus faible possible. Le moteur 5 peut être par exemple un moteur à courant alternatif asynchrone ou à courant continu à excitation parallèle, ou encore un moteur pas à pas.

Le système de sécurité est dimensionné dans l'objectif de garantir sa tenue à un couple maximal total comprenant :
- le couple statique dû à la masse suspendue 37,
- le couple dynamique dû à la décélération de la masse suspendue 37,
- le couple dynamique dû à la décélération des moments d'inertie de masse des parties tournantes du mécanisme en excluant les parties éventuellement découplées par un limiteur de couple,
- le couple auquel est réglé l'éventuel limiteur de couple 32, ramené au système S.

Le système S agit de la manière suivante :
- En fonctionnement normal, sens montée ou descente, le système transmets un très faible couple au tambour : il accompagne le mouvement sans s'y opposer.
- En cas de rupture de la chaîne cinématique en montée, le système se verrouille immédiatement : le tambour 34 est stoppé.
- En cas de rupture de la chaîne cinématique en descente, après atteinte par la vis 8 de la vitesse de rotation à vide de cette vis 8 entraînée par son moteur 5, la roue 6 commence à transmettre un couple à la vis 8 : le système S se verrouille et le tambour 34 est stoppé.
- En cas de survitesse en descente ou en montée défaillance électrique ou glissement du limiteur de couple 32, après atteinte par la vis 8 de ladite vitesse de rotation à vide, la roue 6 commence à transmettre un couple à la vis 8 : le système S se verrouille et le tambour 34 est stoppé.
- En cas d'incohérence entre le sens de rotation du moteur principal 30 et du moteur 5, le système S se verrouille immédiatement.
- Une défaillance mécanique ou électrique du système S lui-même devrait également mener à son blocage. Même en cas de rupture de l'arbre PV côté système S, la maîtrise de la charge 37 reste assurée par la chaîne cinématique "puissance" du treuil restée intègre.

Une fois verrouillé et si la chaîne cinématique est intègre, le système S peut être débloqué :
- soit en inversant le sens de rotation des deux moteurs 30 et 5, par rapport au sens de rotation pendant lequel le verrouillage s'est produit,
- soit en inversant momentanément le sens de rotation du moteur 30 par rapport au sens de rotation pendant lequel le verrouillage s'est produit, ce qui conduit à débloquer et verrouiller le système S dans le sens opposé, et permet par conséquent de repartir dans le sens initial si les moteurs 30 et 5 sont remis en marche suivant ce sens.

Dans le cas ou la chaîne cinématique n'est pas intègre, ou en cas de problème de moteur ou d'alimentation, un entraînement de secours manuel ou motorisé peut être mis en oeuvre sur le bout d'arbre 4a afin d'effectuer l'affalage de la charge 37.

Le choc dû au verrouillage plus ou moins brutal de l'engrenage roue 6 / vis sans fin 8 est amorti par les ressorts 10 et l'écoulement du liquide dans la saignée 12, ainsi que, le cas échéant, par la libération du pivotement de la roue 6 par rapport à son moyeu par friction mutuelle des disques 19 et 20.

Afin de limiter les sollicitations dynamiques tout en diminuant le temps d'arrêt en cas de blocage du système, un limiteur de couple 32 peut être prévu.

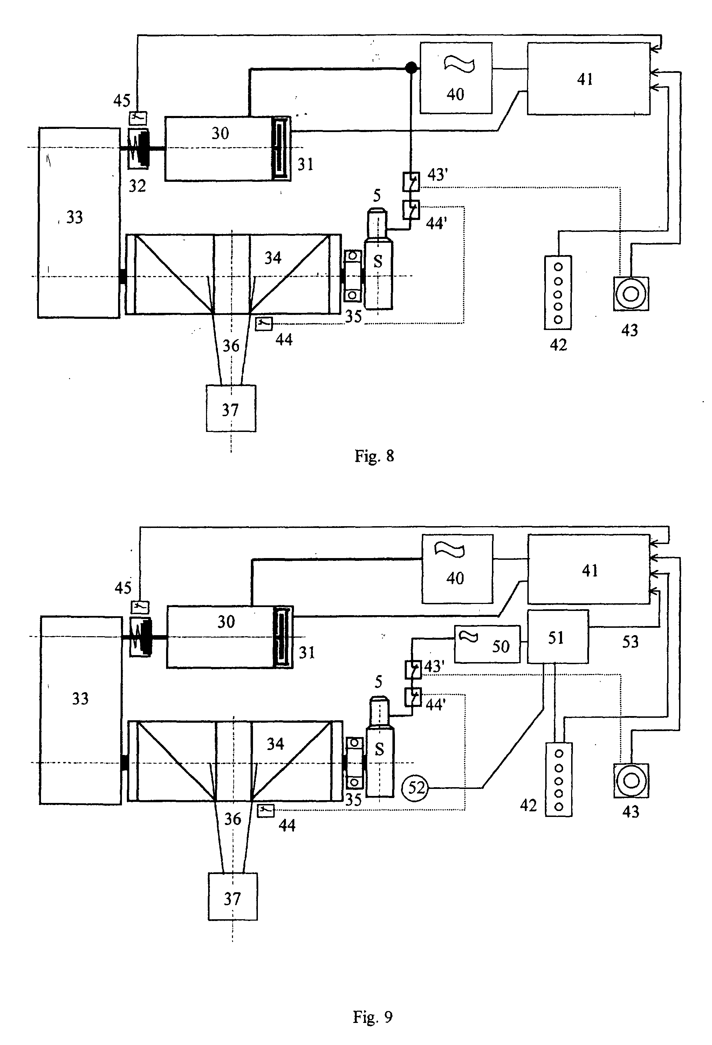

Il existe plusieurs façons de réaliser la synchronisation du moteur 5 avec le moteur principal 30. Par exemple, dans le cas de moteurs à courant alternatif ou de moteurs pas à pas, les deux moteurs peuvent être alimentés avec des courants de fréquence égale comme dans le schéma d'exemple de la figure 8, ou dont les fréquences ont entre elles un rapport fixe préétabli. Il est possible aussi, en fonction des jeux et des temps de réaction, que le départ du moteur 30 doive être temporisé par rapport au départ du moteur 5. Une alimentation variable et spécialement élaborée pour le moteur 5 du système par des dispositifs de type "variateur électronique" et "automate programmable" peuvent être avantageusement mis en oeuvre.

L'alimentation du moteur 5 du système peut être élaborée par le contrôle-commande de l'appareil d'après les informations sur les paramètres de fonctionnement vitesses, accélérations, couples, intégrité, etc., fournis par des capteurs appropriés. Dans ce cas, le blocage du système peut être commandé.

La figure 8 montre un exemple de réalisation du contrôle-commande de l'exemple d'application. On y retrouve, schématisés et disposés de la même façon que sur la figure 7, le moteur principal 30, le frein de service 31, l'accouplement limiteur de couple 32, le réducteur 33, le tambour 34, le câble de levage 36, la charge 37, le palier 35 et le système de sécurité S. Le moteur principal 30 et le moteur du système 5 sont des moteurs à courant alternatif. Ils sont alimentés en parallèle par le même variateur de fréquence 40. Les moteurs 30 et 5, le réducteur principal 33 et le rapport de réduction du système S respectent les règles énoncées plus haut. Le variateur de fréquence et le frein de service sont gérés par un automate programmable 41, qui traite les informations qui proviennent du poste de commande 42, de l'arrêt d'urgence 43, d'un détecteur de dépassement de course de levage surcourse haut 44 et d'un détecteur 45 de glissement dans l'accouplement limiteur de couple 32.

L'arrêt du moteur du système provoque son verrouillage immédiat et constitue le moyen d'arrêt d'urgence. En plus du déclenchement automatique du système tel que décrit plus haut, son déclenchement peut être commandé par l'actionnement du bouton d'arrêt d'urgence 43, au moyen d'un des contacts de ce dernier 43' et par l'atteinte de l'interrupteur du surcourse haut 44. La sécurité est ainsi maximale, car l'ouverture des contacts 44' et 43' garantit directement l'arrêt immédiat. Afin de renforcer encore la sécurité et protéger le moteur principal 30, qui s'il restait alimenté pourrait subir des dommages, les informations "arrêt d'urgence" et "surcourse haut" sont transmises également à l'automate 41, qui coupe l'alimentation du moteur principal 30 et fait retomber le frein de service 31. Enfin, le détecteur de glissement 45 joue un rôle similaire dans le cas d'un déclenchement automatique du système, en commandant, par l'intermédiaire de l'automate 41, l'arrêt des deux moteurs 30 et 5 et la retombée du frein de service 31.

Suivant ce schéma, les défaillances que la mise en oeuvre du système de sécurité permet de pallier de manière sûre et efficace sont :
- la rupture de chaîne cinématique,
- le dévirage dynamique,
- le dévirage statique,
- la survitesse.

D'autre part, il intervient avantageusement dans le traitement :
- du surcourse haut,
- de l'arrêt d'urgence.

Cependant, dans le schéma figure 8, il subsiste des risque que le treuil effectue des mouvements non maîtrisés, car les deux moteurs sont alimentés en parallèle et les informations du poste de commande ne sont pas comparés avec le mouvement effectif du treuil. En effet, un défaut du poste de commande 42, du contrôle-commande en général représenté pour simplifier uniquement par l'automate 41, mais beaucoup plus compliqué dans la réalité ou du variateur 40 peut mener à des mouvements inopinés, par exemple l'alimentation intempestive des moteurs 30 et 5 ou un départ dans le mauvais sens.

La figure 9 montre un exemple de schéma qui résout cette problématique. L'alimentation et la gestion de la vitesse du moteur 5 y sont réalisées séparément de ceux du moteur principal. Le micro-automate 51 et le variateur de faible puissance 50 sont dédiés uniquement au système de sécurité S. Le poste de commande 42 possède deux voies séparées par commande. Ainsi, chacun des automates 41 et 51 traite les commandes issues de sa propre liaison avec le poste de commande. Un codeur 52 informe l'automate 51 du système de la vitesse et du sens de rotation du tambour 34. L'automate 51 du système est équipé d'une fonction d'auto diagnostic et en informe l'automate 41, par la liaison 53 signal "test OK".

Suivant ce schéma, des sécurités supplémentaires par rapport au schéma de la figure 8 sont prévues :
- en cas d'incohérence entre les commandes reçues par l'automate 41 et l'automate 51, les moteurs 30 et 5 sont alimentés de manières incohérentes. Les moteurs 30 et 5 n'étant pas synchronisés, le système S se verrouille, sauf si le défaut consiste à donner une consigne "vitesse" dans le bon sens, mais anormalement élevée au moteur 5 du système,
- il en est de même en cas de défaillance d'un des deux automates 41 et 51,
- dans le cas où le moteur 5 du système reçoit une consigne "vitesse" anormalement élevée, ce qui aurait pour conséquence de dégrader son rôle de sécurité "survitesse", l'information donnée par le codeur 52 permet à l'automate 51 de détecter le défaut et de déclencher un arrêt immédiat.

Un autre avantage de ce schéma est une plus grande flexibilité dans la synchronisation du moteur 5 du système avec le moteur principal 30, rendue possible par l'alimentation variable séparée de chacun des deux moteurs.

Il va de soi que l'invention n'est pas limitée à la forme de réalisation décrite ci-dessus à titre d'exemple mais qu'elle en embrasse au contraire toutes les variantes de réalisation entrant dans le champ de protection défini par les revendications ci-annexées.

## Revendications

1. Système de freinage (S), destiné à équiper un mécanisme à un ou plusieurs organes tournants (34), comprenant une roue dentée (6), liée en rotation par rapport à au moins un organe tournant (34) à freiner, et une vis sans fin (8), entraînée en rotation par un moteur (5) lors de la rotation de l'organe tournant (34), cette vis (8) étant en prise permanente avec la roue dentée (6) ;
**caractérisé en ce que** la vis (8) est contenue dans un alésage de diamètre légèrement supérieur à celui de la vis (8).

2. Système de freinage (S) selon la revendication 1, **caractérisé en ce que** la vis (8) comprend au moins une portée cylindrique (8a) coaxiale à sa portion filetée, et
- ledit alésage présente un diamètre légèrement supérieur à celui de cette ou ces portées cylindriques.

3. Système de freinage (S) selon la revendication 1 ou la revendication 2, **caractérisé en ce qu'**il comprend des moyens (10 ; L, 12 ; 13 à 16 ;19 à 21) d'absorption/dissipation d'énergie spécifiques, venant en supplément du moyen de dissipation d'énergie que constituent les frottements des dents de la roue (6) contre le filet de la vis (8).

4. Système de freinage (S) selon la revendication 3, **caractérisé en ce que** lesdits moyens spécifiques d'absorption/dissipation d'énergie comprennent un montage coulissant de la vis (8) dans ledit alésage et des moyens (10, L, 12) d'absorption/dissipation d'énergie associés à cette vis (8) et actionnés par celle-ci lors de son coulissement.

5. Système de freinage (S) selon la revendication 4, **caractérisé en ce que** lesdits moyens associés d'absorption/dissipation d'énergie comprennent au moins un moyen élastique, tel qu'un ressort (10), interposé entre au moins une extrémité de la vis (8) et les parois de la pièce (1) délimitant l'alésage.

6. Système de freinage (S) selon la revendication 4 ou la revendication 5, **caractérisé en ce que** lesdits moyens associés d'absorption/dissipation d'énergie comprennent :
- un liquide (L) contenu dans l'espace délimité par au moins un piston (8a), contre lequel vient en appui une extrémité de la vis (8), et les parois de ladite pièce (1) délimitant l'alésage, et
- un ou plusieurs conduits (12) et/ou interstices d'échappement de ce liquide (L) lors du coulissement de la vis (8), ce ou ces conduits (12) et/ou interstices ayant des sections réduites propres à n'autoriser un échappement dudit liquide (L) que sur un intervalle de temps non instantané.

7. Système de freinage (S) selon la revendication 6, **caractérisé en ce que** le ou lesdits conduits (12) et/ou interstices comprennent des moyens (15) de réglage du débit du liquide (L).

8. Système de freinage (S) selon la revendication 6 ou la revendication 7, **caractérisé en ce que** le ou lesdits conduits (12) et/ou interstices comprennent des moyens (16) anti-retour de ce liquide (L), qui permettent d'obtenir un amortissement différent pour chaque sens de coulissement de la vis (8).

9. Système de freinage (S) selon l'une des revendications 4 à 8, **caractérisé en ce qu'**il inclut des capteurs ou des détecteurs du coulissement de la vis (8), sollicitant des moyens de commande ou de contrôle qui agissent sur les moyens d'entraînement du ou desdits organes tournants (34).

10. Système de freinage (S) selon l'une des revendications 3 à 9, **caractérisé en ce que** lesdits moyens spécifiques d'absorption/dissipation d'énergie comprennent des moyens (19 à 21) de liaison à frottements entre la roue dentée (6) et son moyeu, ou entre la roue dentée (6) et l'arbre recevant cette roue (6), libérant le pivotement de cette roue (6) par rapport à ce moyeu au-delà d'un certain seuil de couple, avec frottements.

11. Système de freinage (S) selon l'une des revendications 3 à 10, **caractérisé en ce que** lesdits moyens spécifiques d'absorption/dissipation d'énergie comprennent un montage souple et/ou flottant du système de freinage (S) par rapport au bâti qui le comporte.

12. Système de freinage (S) selon l'une des revendications 1 à 11, **caractérisé en ce qu'**il comprend un variateur électronique (40) de contrôle de la vitesse maximale du moteur (5) d'actionnement de la vis (8)

13. Système de freinage (S) selon la revendication 12, **caractérisé en ce que** l'alimentation du moteur (5) et la gestion de la vitesse de celui-ci sont réalisées séparément de celles du moteur (30) du mécanisme, au moyen d'un variateur électronique (50) et d'un automate (51) possédant une liaison indépendante avec le poste de commande (42) du mécanisme, ce poste de commande (42) délivrant des informations redondantes audit automate (51).

## Patentansprüche

1. Bremssystem (S), das zur Ausrüstung eines Mechanismus mit einem oder mehreren Drehgliedern (34) bestimmt ist, mit einem Zahnrad (6), das bezüglich mindestens eines zu bremsenden Drehgliedes (34) drehbar verbunden ist, und einer Endlosschraube (8), die mittels eines Motors (5) während der Drehung des Drehgliedes (34) gedreht wird, wobei diese Schraube (8) mit dem Zahnrad (6) ständig in Eingriff ist, **dadurch gekennzeichnet, dass** die Schraube (8) in einer Bohrung enthalten ist, deren Durchmesser geringfügig grösser als derjenige der Schraube (8) ist.

2. Bremssystem (S) nach Anspruch 1, **dadurch gekennzeichnet, dass** die Schraube (8) mindestens eine zu ihrem Gewindeabschnitt koaxiale zylindrische Lauffläche (8a) aufweist, und dass die Bohrung einen Durchmesser aufweist, der geringfügig grösser als derjenige dieser einen oder mehreren zylindrischen Laufflächen ist.

3. Bremssystem (S) nach Anspruch 1 oder 2, **dadurch gekennzeichnet, dass** es spezifische Mittel (10; L, 12; 13-16; 19-21) zur Absorption/Dissipation von Energie aufweist, welche das Mittel zur Dissipation von Energie ergänzen, das durch die Reibung der Zähne des Rades (6) an dem Gewinde der Schraube (8) gebildet wird.

4. Bremssystem (S) nach Anspruch 3, **dadurch gekennzeichnet, dass** die spezifischen Mittel zur Absorption/Dissipation von Energie eine gleitende Befestigung der Schraube (8) in der Bohrung sowie Mittel (10, L, 12) zur Absorption/Dissipation von Energie aufweisen, die dieser Schraube (8) zugeordnet sind und durch diese während ihres Gleitens betätigt werden.

5. Bremssystem (S) nach Anspruch 4, **dadurch gekennzeichnet, dass** die zugeordneten Mittel zur Absorption/Dissipation von Energie mindestens ein elastisches Mittel, wie z.B. eine Feder (10), aufweisen, das zwischen mindestens einem Ende der Schraube (8) und den Wänden des die Bohrung begrenzenden Teils (1) angeordnet ist.

6. Bremssystem (S) nach Anspruch 4 oder 5, **dadurch gekennzeichnet, dass** die zugeordneten Mittel zur Absorption/Dissipation von Energie aufweisen:
eine Flüssigkeit (L), die in dem Raum enthalten ist, der durch mindestens einen Kolben (8a), an dem ein Ende der Schraube (8) anliegt, und die Wände des die Bohrung begrenzenden Teils (1) begrenzt ist; und
einen oder mehrere Kanäle (12) und/oder Ausweich-Zwischenräume für die Flüssigkeit (L) während des Gleitens der Schraube (8), wobei der oder diese Kanäle (12) und/oder Zwischenräume verkleinerte Abschnitte haben, die das Austreten der Flüssigkeit (L) nur über einem nicht-momentanen Zeitintervall gestatten.

7. Bremssystem (S) nach Anspruch 6, **dadurch gekennzeichnet, dass** der oder die Kanäle (12) und/oder Zwischenräume Mittel (15) zum Einstellen des Durchsatzes der Flüssigkeit (L) aufweisen.

8. Bremssystem (S) nach Anspruch 6 oder 7, **dadurch gekennzeichnet, dass** der oder die Kanäle (12) und/oder Zwischenräume Mittel (16) für die Nicht-Umkehr dieser Flüssigkeit (L) aufweisen, die es gestatten, eine unterschiedliche Dämpfung für jede Gleitrichtung der Schraube (8) zu erhalten.

9. Bremssystem (S) nach einem der Ansprüche 4 bis 8, **dadurch gekennzeichnet, dass** es Sensoren oder Detektoren des Gleitens der Schraube (8) enthält, welche Steuerungs- oder Überwachungsmittel beaufschlagen, die auf die Antriebsmittel des oder der Drehglieder (34) einwirken.

10. Bremssystem (S) nach einem der Ansprüche 3 bis 9, **dadurch gekennzeichnet, dass** die spezifischen Mittel zur Absorption/Dissipation von Energie Reibungs-Verbindungsmittel (19-21) zwischen dem Zahnrad (6) und seiner Nabe oder zwischen dem Zahnrad (6) und der dieses Rad (6) aufnehmenden Welle aufweist, wodurch ein Verdrehen dieses Rades (6) bezüglich dieser Nabe über eine gewisse Drehmomentschwelle hinaus durch Reibung freigegeben wird.

11. Bremssystem (S) nach einem der Ansprüche 3 bis 10, **dadurch gekennzeichnet, dass** die spezifischen Mittel zur Absorption/Dissipation von Energie eine nachgiebige und/oder schwimmende Lagerung des Bremssystems (S) bezüglich des tragenden Rahmens aufweisen.

12. Bremssystem (S) nach einem der Ansprüche 1 bis 11, **dadurch gekennzeichnet, dass** es einen elektronischen Variator (40) zur Überwachung der maximalen Drehzahl des Motors (5) zur Betätigung der Schraube (8) aufweist.

13. Bremssystem (S) nach Anspruch 12, **dadurch gekennzeichnet, dass** die Versorgung des Motors (5) und die richtige Einstellung seiner Drehzahl gesondert von der Versorgung und richtigen Einstellung des Motors (30) des Mechanismus mittels eines elektronischen Variators (50) und eines Automaten (51) erfolgen, der eine unabhängige Verbindung mit dem Steuergerät (42) des Mechanismus besitzt, wobei dieses Steuergerät (42) redundante Informationen an den Automaten (51) liefert.

## Claims

1. Braking system (S), intended to be fitted to a mechanism with one or more rotating members (34), comprising a toothed wheel (6), connected rotationally with respect to at least one rotating member (34) to be braked, and a worm (8), driven rotationally by a motor (5) upon the rotation of the rotating member (34), this worm (8) being permanently in mesh with the toothed wheel (6); **characterised in that** the worm (8) is contained in a bore with a diameter slightly larger than that of the worm (8).

2. Braking system (S) according to Claim 1, **characterised in that** the worm (8) comprises at least one cylindrical bearing surface (8a) coaxial with its threaded portion, and
- the said bore has a diameter slightly larger than that of this or these cylindrical bearing surfaces.

3. Braking system (S) according to Claim 1 or Claim 2, **characterised in that** it comprises specific energy absorption/dissipation means (10; L, 12; 13 to 16; 19 to 21), in addition to the energy dissipation means constituted by the friction between the teeth of the wheel (6) and the thread of the worm (8).

4. Braking system (S) according to Claim 3, **characterised in that** the said specific energy absorption/dissipation means comprise a sliding mounting of the worm (8) in the said bore and energy absorption/dissipation means (10, L, 12) associated with this worm (8) and actuated by it upon its sliding.

5. Braking system (S) according to Claim 4, **characterised in that** the said associated energy absorption/dissipation means comprise at least one resilient means, such as a spring (10), interposed between at least one end of the worm (8) and the walls of the part (1) delimiting the bore.

6. Braking system (S) according to Claim 4 or Claim 5, **characterised in that** the said associated energy absorption/dissipation means comprise:
- a liquid (L) contained in the space delimited by at least one piston (8a), against which one end of the worm (8) comes to bear, and the walls of the said part (1) delimiting the bore, and
- one or more conduits (12) and/or interstices for this liquid (L) to escape upon the sliding of the worm (8), this or these conduits (12) and/or interstices having reduced sections suitable for allowing the said liquid (L) to escape only over a non-instantaneous time interval.

7. Braking system (S) according to Claim 6, **characterised in that** the said one or more conduits (12) and/or interstices comprise means (15) for adjusting the flow of liquid (L) .

8. Braking system (S) according to Claim 6 or Claim 7, **characterised in that** the said one or more conduits (12) and/or interstices comprise means (16) for preventing the return of this liquid (L), which make it possible to obtain a different damping for each sliding direction of the worm (8).

9. Braking system (S) according to one of Claims 4 to 8, **characterised in that** it includes sensors or detectors of the sliding of the worm (8), which actuate command or control means which act on the means for driving the said one or more rotating members (34).

10. Braking system (S) according to one of Claims 3 to 9, **characterised in that** the said specific energy absorption/dissipation means comprise friction connecting means (19 to 21) between the toothed wheel (6) and its hub, or between the toothed wheel (6) and the shaft receiving this wheel (6), freeing the pivoting of this wheel (6) with respect to this hub beyond a certain torque threshold, with friction.

11. Braking system (S) according to one of Claims 3 to 10, **characterised in that** the said specific energy absorption/dissipation means comprise a flexible and/or floating mounting of the braking system (S) with respect to the frame which contains it.

12. Braking system (S) according to one of Claims 1 to 11, **characterised in that** it comprises an electronic controller (40) for controlling the maximum speed of the motor (5) for actuating the worm (8).

13. Braking system (S) according to Claim 12, **characterised in that** the supply to the motor (5) and the control of the speed thereof are performed separately from those of the motor (30) of the mechanism, by means of an electronic controller (50) and a controller (51) having an independent link to the control station (42) of the mechanism, this control station (42) delivering redundant information to the said controller (51).
